# DEMANDE DE BREVET EUROPEEN

(11) **EP 2 131 313 A1**
(43) Date de publication de la demande: **09.12.2009**
(21) Numéro de dépôt: 08290503.5
(22) Date de dépôt: 02.06.2008
(51) Int. Cl.: G06K 19/07

(54) **Procédé de sélection d'application dans un dispositif mobile de communication sans fil dans un système NFC et dispositif mobile de communicationsans fil correspondant**

(71) Demandeur: Gemplus, 13420 Gemenos (FR)
(72) Inventeur: Rhelimi, Alain, 92197 Meudon Cédex (FR)
(74) Mandataire: Cassagne, Philippe M.J.

(57) **Abrégé**

L'invention vise à remédier au problème de la sélection d'une application et/ou configuration dans un dispositif d'un système NFC ne disposant pas d'une source d'énergie autonome ou lorsque la source d'énergie du dispositif est temporairement inopérante ou ne dispose pas d'une source d'énergie autonome. A cette fin, un dispositif mobile de communication sans fil d'un système NFC selon l'invention comprend
- un capteur de type accéléromètre (Acc) pour produire un signal de détection de déplacement dudit dispositif alors que le capteur est alimenté via un champ émis par un coupleur auprès duquel ledit dispositif est rapproché,
- un processeur (Pro) pour comparer ledit signal de détection de déplacement avec une séquence prédéterminée correspondant à une application et/ou configuration, et sélectionner en conséquence ladite application et/ou configuration dans le cas d'une comparaison positive.

## Description

La présente invention concerne un procédé de sélection d'application et/ou configuration liée à une application dans un dispositif mobile de communication sans fil dans un système NFC, et un dispositif mobile de communication sans fil correspondant.

Le dispositif mobile de communication sans fil selon l'invention peut être :
- une carte sans-contact du type au format ISO7816 incorporant un circuit intégré et une antenne, ou
- un téléphone mobile incluant un contrôleur NFC et ou bien une carte à puce de type SIM ou bien un élément sécurisé.

On entend dans la présente demande par « NFC » (Near Field Communication / Communication en champ proche) toute solution permettant la communication entre un coupleur (appartenant à une infrastructure) et un dispositif mobile de communication sans fil, ou entre au moins deux dispositifs mobiles de communication sans fil.

Si le dispositif mobile de communication sans fil est un téléphone mobile, le NFC peut permettre de faire fonctionner un dispositif mobile de communication sans fil en mode émulation de carte, c'est à dire que le dispositif mobile de communication sans fil associé à un élément de sécurité (de type carte à puce) émule le fonctionnement d'une carte à puce sans-contact. Dans le cas où le dispositif mobile de communication sans fil est un téléphone mobile (par exemple compatible GSM ou UMTS), la carte SIM est utilisée comme élément de sécurité. Les usages sont multiples et forment un sur-ensemble des usages de type "carte sans-contact": paiement, billettique (ex: navigo), couponing, contrôle d'accès. Le dispositif mobile de communication sans fil, par ses fonctionnalités étendues (IHM, connexion réseau, capacité de traitement), enrichit considérablement les services basées sur des cartes. Par exemple, le mobile permet de payer et de recharger ses titres de transport à tout instant ou de recevoir l'ensemble de ses points de fidélité sur son mobile. Dans un mode alternatif dit « lecteur », le dispositif mobile de communication sans fil devient un lecteur de cartes sans-contacts ou de "tags" passifs (étiquettes électroniques). Ce mode permet à un usager de lire des informations en approchant son mobile devant des étiquettes électroniques disposées dans la rue, sur des affiches, sur des colis ou dans des abris bus, ou sur sa carte de visite (vCard).

L'invention concerne plus précisément de tels procédé et dispositif opérant une sélection d'application lorsque le dispositif - qui communique par le biais d'une technologie NFC (communication en champ proche) - ne dispose pas d'une source d'énergie autonome (ex: une batterie) ce qui est le cas par exemple d'une carte sans-contact, ou dans lequel ladite source d'énergie est temporairement insuffisante pour correctement alimenter les dispositifs usuels d'interface avec l'utilisateur tel un clavier, un écran ou un stylet ou inopérante par une action volontaire de l'utilisateur (alimentation coupé (OFF)) suite à une régulation l'imposant (e.g. non utilisation de terminal portable au sein d'un avion ou d'un hopital)

L'invention peut être mise en oeuvre dans toute partie du dispositif mobile de communication sans fil NFC tels que dans le téléphone mobile, ou dans une carte à puce sans contact ou dans une combinaison telle qu'une carte SIM d'une part, et un contrôleur NFC embarqué au sein d'un téléphone mobile d'autre part.

### Etat de l'Art

Les dispositifs mobiles de communication sans fil peuvent communiquer avec une infrastructure externe (coupleurs) par exemple selon les standard NFC tel que ISO 14443, ISO 15693, ISO 18092 et peuvent être alimentés en énergie de deux manières possibles :
- Soit par extraction de l'énergie du champ magnétique émise par le coupleur, et/ou
- Soit par une source d'énergie autonome telle qu'une batterie.

La demande de brevet W02006/085246 décrit une méthode pour assurer une continuité des fonctionnalités NFC d'un dispositif de communication mobile sans fil NFC dans lequel il est proposé de :
- mesurer l'état de charge d'une batterie, et,
- dès lors que l'état de charge mesuré est inférieur à un seuil prédéterminé, commuter de l'alimentation de la batterie vers une alimentation par le coupleur distant de l'infrastructure (le terminal étant positionné dans le champ de rayonnement du coupleur).

Le dispositif mobile de communication sans fil peut héberger de multiples applications qui peuvent être en conflits, à savoir qu'elles ne peuvent pas s'interfacer avec le coupleur de l'infrastructure car elles exposent des paramètres de communications incompatibles.

En effet, en sus des deux modes de fonctionnement décrits plus haut à titre d'exemple (« émulation carte » et « lecteur »), un dispositif mobile de communication sans fil NFC peut mettre en oeuvre plusieurs protocoles de communication sans contact et est par exemple capable d'échanger des données suivant ou bien le protocole ISO 14443-A, ou bien le protocole ISO 14443-B, ou encore le protocole ISO 15693, etc.. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif. Un dispositif mobile de communication sans fil NFC est donc un dispositif multi-mode et multi-protocole. Une application est définie par une configuration de protocole et de mode. Typiquement, il peut inclure différentes applications, par exemple :
- des applications « Lecteur » : le dispositif mobile de communication sans fil est en mode lecteur pour lire ou écrire un circuit intégré sans contact. Le dispositif mobile de communication sans fil est dans ce cas utilisé comme un lecteur RFID. Ce type d'application peut être gratuit et consister par exemple dans la lecture de données publicitaires insérées dans un affichage publicitaire. L'application peut aussi être payante et consister par exemple dans la lecture d'informations réservées à des abonnés. Le programme de l'application correspondant est de préférence détenu et exécuté par un processeur sans sécurité si le service est gratuit ou sera de préférence détenu et exécuté par un processeur sécurisé s'il est payant car il nécessite une identification de l'abonné ou une authentification des données transmises (ex. signature).
- des applications de type « Emulation de Carte » : le dispositif mobile de communication sans fil NFC est en mode émulation de carte pour être lu par des coupleurs RD conventionnels dans des applications de paiement ou de contrôle d'accès payant (machine de paiement, entrée de métro, etc.). Le dispositif mobile de communication sans fil (par exemple téléphone mobile) est alors utilisé comme une carte à puce. Le programme de l'application AP2 est de préférence détenu et exécuté par un processeur sécurisé, car l'accès au service nécessite une identification de l'abonné.
- des applications de type « device » peuvent même être prévues : dans ce cas, le dispositif mobile de communication sans fil NFC est en mode "device" et dialogue avec un autre dispositif, par exemple un lecteur embarqué dans un autre téléphone mobile ou dans un ordinateur. Ce type d'application est généralement gratuit et permet de transférer des paquets de données d'un dispositif à l'autre transfert de fichiers en point à point notamment). Le programme de l'application est de préférence détenu et exécuté par le processeur non sécurisé, comme qui dispose d'une puissance de calcul supérieure à un processeur sécurisé si celui-ci est un processeur de carte SIM.

De nombreux coupleurs interfaçant des applications implémentent des algorithmes de résolutions de collisions afin d'accepter une seule carte dans le champ du coupleur quelque soit le standard à laquelle répond la carte. Le brevet US 2006/0022042 décrit un de ces algorithmes qui est couramment utilisé dans les terminaux de paiement (Pay-pass). La présentation de deux cartes dans le champ du coupleur génère immédiatement un message vers l'utilisateur («transaction abandonnée, veuillez retirer une carte du champ du coupleur ») l'invitant à retirer une carte. Hors certaines applications ne fonctionnent que sur un type de technologie (ex : Standard ISO 14443-A ou ISO 14443-B) et peuvent cohabiter difficilement au sein du même dispositif portable. Un dispositif mobile de communication sans fil hébergeant plusieurs applications peut causer un problème de sélection d'applications. Un dispositif mono application n'expose pas cette difficulté car l'utilisateur doit disposer de plusieurs dispositifs et ainsi présenter le bon devant le coupleur. A titre d'exemple, un utilisateur disposant de plusieurs cartes sans contact dans son portefeuille présentera la bonne carte devant le coupleur correspondant à l'application souhaitée. Par essence, une carte sans contact (mono-application) ne dispose pas de source d'énergie autonome et le problème lié à l'interface homme/machine pour la sélection d'une application ne se présente pas.

Dans le cadre d'un dispositif mobile de communication sans fil hébergeant plusieurs applications, une intervention de l'utilisateur est nécessaire pour la présélection de l'application compatible.

En fonction du contexte, l'utilisateur choisit une présélection (par exemple transport, paiement, lecture, etc...) et présente ledit dispositif mobile de communication sans fil devant le coupleur afin de déclencher une transaction.

Par exemple, un utilisateur décide de payer avec un compte bancaire du banque X, il choisit la présélection contenant l'application de la banque X et déclenche la transaction. La présélection ne doit pas être ambiguë afin de pas contenir deux banques pouvant amener à une situation incertaine quant aux termes de la transaction (ex : deux banques dans la même présélection).

Ce choix de présélection se réalise par le truchement d'une interface homme/machine liée au dispositif mobile de communication sans fil. Par exemple, si le dispositif mobile de communication sans fil est un téléphone portable, il dispose d'un écran et d'un clavier permettant l'interaction avec une application spécialisée (ex : menus) destinée à cette usage.

### Problème Technique

Ladite interface homme/machine (écran, clavier, etc...) du dispositif mobile de communication sans fil demande des ressources énergétiques autonomes (ex : batterie) dont ne dispose pas (carte sans contact) ou plus un dispositif mobile de communication sans fil qui aurait ses batteries épuisées.

L'invention vise à résoudre ce problème technique. A cette fin, un procédé de sélection d'une application par un utilisateur dans un dispositif mobile de communication sans fil d'un système NFC, ledit dispositif ne disposant pas d'une source d'énergie autonome ou ladite source d'énergie étant temporairement inopérante, **caractérisé en ce qu**'il comprend les étapes de :
- production par un capteur de type accéléromètre dans le dispositif mobile de communication sans fil, d'un signal de détection de déplacement dudit dispositif, ledit capteur étant alimenté via un champ émis par un coupleur auprès duquel ledit dispositif est rapproché,
- comparaison dudit signal de détection de déplacement avec une séquence prédéterminée correspondant à l'application ou à une configuration liée à une application,
- sélection de ladite application/configuration dans le cas d'une comparaison positive,
remédiant ainsi à l'absence de l'interface utilisateur en résultat d'une source d'énergie autonome inexistante ou rendue inopérante.

Un dispositif mobile de communication sans fil d'un système NFC comprend selon l'invention :
- un capteur de type accéléromètre pour produire un signal de détection de déplacement dudit dispositif alors que capteur est alimenté via un champ émis par un coupleur auprès duquel ledit dispositif est rapproché,
- un processeur pour comparer ledit signal de détection de déplacement avec une séquence prédéterminée correspondant à une application ou à une configuration liée à un application, et sélectionner en conséquence ladite application/configuration dans le cas d'une comparaison positive,

D'autres caractéristiques et avantages de la présente invention apparaîtront plus clairement à la lecture de la description qui suit en relation avec les dessin annexés correspondants dans lesquels :
- La Figure 1 montre un exemple d'architecture d'un dispositif mobile de communication sans fil selon la technique antérieure ; et
- La Figure 2 montre un bloc diagramme de circuits pour la mise en oeuvre d'un mode de réalisation d'un dispositif mobile de communication sans fil selon l'invention.

### DESCRIPTION DETAILLEE DE L'INVENTION

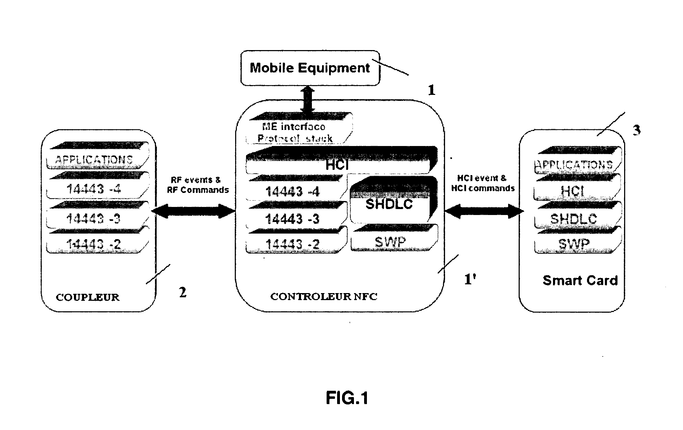

Comme montré dans la Figure 1, un dispositif mobile de communication sans fil, lorsqu'il est sous la forme d'un téléphone mobile, comprend selon la technique antérieure le téléphone mobile lui-même 1 qui incorpore un contrôleur NFC 1', le téléphone recevant par ailleurs une carte SIM 3. Le contrôleur NFC 1' est un composant connu et met notamment en oeuvre un ou plusieurs protocoles de communication sans contact, par exemple le protocole ISO 14443-A, et/ou le protocole ISO 14443-B, et/ou encore le protocole ISO 15693 pour la communication avec le coupleur 2 distant avec lequel communique le dispositif mobile de communication sans fil sous la forme d'un téléphone mobile . Le coupleur 2 est par exemple une borne de paiement, une borne de passage d'un réseau transport métropolitain ou autre. Une ou plusieurs applications APPLICATIONS (de paiement, transport, etc...) est/sont assocïée(s) avec le coupleur 2. Le contrôleur NFC 1' inclut également des couches de communications SWP, HDLC et HCl telles que définies par l'ETSI (European Télécommunication Standardization Institute) dans les Recommandations TS 102.613 et TS 102.622, incluses dans la présente demande par cette référence.. Ces couches de communications permettent d'échanger des données avec la carte SIM 3 a travers des couches SWP, HDLC et HCl correspondantes. Dans le mode de réalisation illustrée, la carte SIM 2 inclut également une ou plusieurs applications APPLICATIONS (logiciels) de paiement, transport ou autres qui - en couche applicative selon modèle OSI de l'ISO - échangent avec les APPLICATIONS dans le coupleur 2.

Il est à noter que bien que dans le mode de réalisation décrit ici, les APPLICATIONS dans le dispositif mobile de communication sans fil sont dans la carte SIM, elles pourraient alternativement être incluses dans le contrôleur NFC ou dans un élément sécurisé propre. Encore selon une alternative, le dispositif mobile de communication sans fil lui-même peut être une carte sans contact au format ISO7816-1 avec antenne intégrée, auquel cas les APPLICATIONS sont dans la carte sans contact elle-même.

L'invention met à profit un dispositif d'interaction avec l'usager qui ne requiert que très peu d'énergie, laquelle peut donc être extraite du champ magnétique qui baigne le dispositif mobile de communication sans fil.

Elle propose d'utiliser un capteur de mouvement de type « accéléromètre électronique ». De tels accéléromètres en silicium sont désormais très populaires et très bons marchés. Opérant en jauge de contraintes en silicium (http://fr.wikipedia.org/wiki/Jauge de contrainte), un tel accéléromètre électronique capteur peut être :
- intégré sur le microcontrôleur sécurisé de la SIM (par empilement ou « stacking »), ou
- intégré dans le microcontrôleur sécurisé de la SIM (full integration), ou
- intégré dans le corps de carte de la SIM (aucun besoin de sécurité), ou
- intégré sur le chip du NFC contrôleur (stacking) dans le téléphone mobile, ou encore
- connecté au contrôleur NFC et sur le même circuit imprimé, ou encore enfin
- intégré dans le contrôleur NFC.

Ainsi, un accéléromètre peut être embarqué dans le dispositif mobile de communication sans fil soit dans le contrôleur NFC, ou dans l'élément sécurisé, comme une carte SIM, si cette carte est utilisée dans les applications NFC. Il va de soi que ledit accéléromètre peut-être embarqué dans le corps de carte de la SIM ou dans son microcontrôleur

L'accéléromètre ainsi alimenté, comme décrit ci-après par le truchement d'un dispositif extracteur d'énergie du champ magnétique du lecteur est conduit à renseigner sur les déplacements du dispositif mobile de communication sans fil dans l'espace.

Par le biais d'un mouvement convenu de la main et implicitement du dispositif mobile de communication sans fil dans le champ du lecteur, des commandes élémentaires peuvent être transmises pour le choix de la présélection.

Par exemple, deux rotations de droite vers gauche puis inversement en moins de deux secondes permettent de choisir la présélection 1.

Une rotation de droite vers gauche puis inversement en moins de deux secondes permet de choisir la présélection suivante.

Ce dispositif permet de trouver une solution satisfaisante à une situation embarrassante où la transaction ne peut se réaliser car la présélection en cours est non compatible avec le lecteur ou son application.

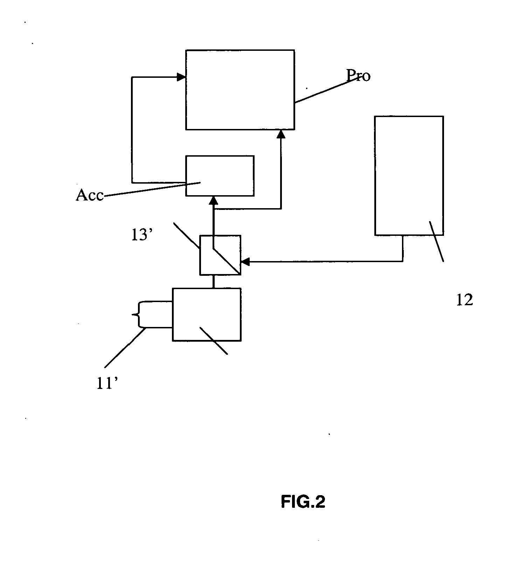

En référence à la Figure 2, dans le cas du mode de réalisation utilisant un téléphone mobile (et non pas une carte sans contact), il est proposé que dès que le dispositif mobile de communication sans fil est informé qu'il est alimenté par le champ magnétique et non par une batterie, alors il se met à l'écoute des informations transmises par l'accéléromètre Acc à fin de décodage du choix. A cette fin, il est mesuré par le circuit 13' l'état de charge d'une batterie 12 dans le téléphone. Si cette charge est inférieure à un seuil prédéterminé, la sortie d'un redresseur de tension 12' connecté en sortie de l'antenne 11' du contrôleur NFC est sélectionnée via un relais (commutateur éléctronique par exemple un transistor MOSFET) 13' de sorte que l'alimentation fournie d'une part à un processeur Pro et à l'accélérateur Acc le sera via le champ produit par le coupleur 2, lorsque le dispositif sera rapproché dudit coupleur 2.

Dés lors le dispositif mobile de communication sans fil tentera d'opérer la transaction, aussi l'ordre des présélections doit suivre celui des préférences de l'utilisateur.

Les signaux digitalisés produits par l'accéléromètre Acc sont traités par le processeur Pro qui opère en conséquence une sélection de l'une des APPLICATIONS. A cette fin, le processeur Pro comprend au moins une séquence prédéterminée numérisée correspondante à un déplacement prédéterminé du dispositif mobile de communication sans fil dans l'espace (ou un plan) par l'utilisateur. Lorsque les signaux digitalisés produits par l'accéléromètre Acc correspondent sensiblement à la séquence prédéterminée numérisée, le processeur produit un signal de sélection d'application de l'APPLICATION (par exemple transport Métro, MicroPaiement, etc...) correspondant à ce déplacement dans l'espace ou un plan. Comme précisé au cours de cette description, ce processeur Pro peut être ou bien le contrôleur NFC dans un téléphone mobile, ou bien le microprocesseur de la carte SIM dans le téléphone mobile connecté au contrôleur NFC, ou bien le processeur d'un élément sécurisé également connecté au contrôleur NFC, ou bien encore le microprocesseur d'une carte à puce sans contact au format ISO 7816. Un algorithme opéré dans le processeur Pro permet de décoder les mouvements afin de transmettre des ordres simples vers le sélecteur de présélection. Le sélecteur de présélection typiquement incorporé dans le processeur opère en conséquence une sélection (a) - de l'une des applications par chargement d'un registre de programme, éventuellement sélection des paramètres de protocole, etc.... et/ou (b) - d'une configuration de mode et/ou protocole requis pour l'opération à mettre en oeuvre par le dispositif mobile de communication sans fil.

Dans le cadre d'un système totalement intégré tel une carte sans contact, l'ensemble des opérations sont réalisées par le même processeur Pro.

Pour un système composite (ex : un téléphone) et quelque soit l'endroit où est hébergé l'accéléromètre (connecté à ou intégré dans l'élément sécurisé ou le contrôleur NFC) , la solution suivante est par exemple possible :
- l'accéléromètre Acc alimenté par le contrôleur NFC via le rayonnement fourni par le coupleur 2 transmet des informations au processeur Pro dans la carte SIM, qui les interprète et transmet des ordres élémentaires de sélection d'application APPLICATIONS et/ou configuration vers le contrôleur NFC. Ainsi dans ce mode, la carte SIM traite les données produites par l'accéléromètre Acc, et le contrôleur NFC inclut les APPLICATIONS et/ou les données de configuration, qui seront séléctionnées apr une information ou commande émise par la carte SIM. Le contrôleur NFC sera e charge de l'exécution de l'application APPLICATION.

La solution reste valide quand le dispositif mobile de communication sans fil dispose d'une source d'énergie autonome mais que cette dernière est insuffisante pour alimenter une interface utilisateur conventionnelle et/ou les circuits électroniques associés.

## Revendications

1. Procédé de sélection d'une application (APPLICATION) et/ou d'une configuration par un utilisateur dans un dispositif mobile de communication sans fil d'un système NFC, ledit dispositif ne disposant pas d'une source d'énergie autonome ou ladite source d'énergie étant temporairement inopérante, **caractérisé en ce qu'**il comprend les étapes de :
- production par un capteur de type accéléromètre dans le dispositif mobile de communication sans fil, d'un signal de détection de déplacement dudit dispositif, ledit capteur étant alimenté via un champ émis par un coupleur auprès duquel ledit dispositif est rapproché,
- comparaison dudit signal de détection de déplacement avec une séquence prédéterminée correspondant à l'application,
- sélection de ladite application et/ou configuration dans le cas d'une comparaison positive, remédiant ainsi à l'absence de l'interface utilisateur en résultat d'une source d'énergie autonome inexistante ou rendue inopérante.

2. Dispositif mobile de communication sans fil d'un système NFC, **caractérisé en ce qu'**il comprend :
- un capteur de type accéléromètre pour produire un signal de détection de déplacement dudit dispositif alors que capteur est alimenté via un champ émis par un coupleur auprès duquel ledit dispositif est rapproché, ledit dispositif ne disposant pas d'une source d'énergie autonome ou ladite source d'énergie étant temporairement inopérante,
- un processeur pour comparer ledit signal de détection de déplacement avec une séquence prédéterminée correspondant à une application et/ou configuration, et sélectionner en conséquence une application et/ou configuration dans le cas d'une comparaison positive.

3. Dispositif mobile de communication sans fil d'un système NFC conforme à la revendication 2, **caractérisée en ce qu'**il comprend une carte sans-contact du type au format ISO7816 incorporant un circuit intégré et une antenne, ledit capteur de type accéléromètre est en silicium et opère en jauge de contraintes en silicium, en étant empilé sur ou intégré dans le circuit intégré.

4. Dispositif mobile de communication sans fil d'un système NFC conforme à la revendication 2, **caractérisé en ce qu'**il comprend un téléphone mobile comprenant un contrôleur NFC et ou bien une carte à puce de type SIM ou bien un élément sécurisé.

5. Dispositif mobile de communication sans fil d'un système NFC conforme à la revendication 4, **caractérisé en ce que** ledit capteur de type accéléromètre est en silicium et opère en jauge de contraintes en silicium, en étant empilé sur ou intégré dans le circuit intégré formant le contrôleur NFC.

6. Dispositif mobile de communication sans fil d'un système NFC conforme à la revendication 4, **caractérisé en ce que** ledit capteur de type accéléromètre est en silicium et opère en jauge de contraintes en silicium, en étant empilé sur ou intégré dans un circuit intégré de la carte SIM ou de l'élément sécurisé.

7. Dispositif mobile de communication sans fil d'un système NFC conforme à l'une quelconque des revendications 4 à 6, **caractérisé en ce que** des données d'application et/ou configuration sont mémorisées dans ou bien le contrôleur NFC ou bien la carte SIM ou l'élément sécurisé.
